# EUROPÄISCHE PATENTSCHRIFT

(11) **EP 3 116 761 B1**
(45) Veröffentlichungstag und Bekanntmachung des Hinweises auf die Patenterteilung: **21.06.2023**
(21) Anmeldenummer: 15707901.3
(22) Anmeldetag: 25.02.2015
(51) Int. Cl.: B61L 23/04

(54) **VORRICHTUNG UND VERFAHREN ZUR HINDERNISERKENNUNG BEI SCHIENENFAHRZEUGEN**
OBSTACLE DETECTION DEVICE AND METHOD FOR RAILWAY VEHICLES
DISPOSITIF ET PROCÉDÉ DE DETECTION D'OBSTACLES POUR VÉHICULES FERROVIAIRES

(30) Priorität: 12.03.2014 AT 501812014
(43) Veröffentlichungstag der Anmeldung: 18.01.2017
(73) Patentinhaber: Siemens Mobility Austria GmbH, 1210 Wien (AT)
(72) Erfinder: SALZGEBER, Gerard, A-8045 Graz (AT)
(74) Vertreter: Siemens Patent Attorneys
(86) Internationale Anmeldenummer: PCT/EP2015/053941
(87) Internationale Veröffentlichungsnummer: WO 2015/135753

(56) Entgegenhaltungen:
- EP-A1- 1 637 405
- WO-A1-2008/122547
- WO-A2-2004/065163
- DE-A5-112005 001 941
- GB-A- 2 396 942
- US-A1- 2007 164 574
- US-A1- 2009 312 949
- US-A1- 2011 232 396
- US-B1- 6 561 301
- "Handbuch Fahrerassistenzsysteme : Grundlagen, Komponenten und Systeme für aktive Sicherheit und Komfort, Chapter 10: Fahrdynamik-Sensoren für FAS; Chapter 21: Gestaltung von Mensch-Maschine-Schnittstellen; Chapter 23: Anzeigen für Fahrerassistenzsysteme; Chapter 24: Fahrerwarnelemente; Chapter 29: 2", 1. Januar 2009 (2009-01-01), HANDBUCH FAHRERASSISTENZSYSTEME : GRUNDLAGEN, KOMPONENTEN UND SYSTEME FÜR AKTIVE SICHERHEIT UND KOMFORT, VIEWEG + TEUBNER, WIESBADEN, XP002712019, ISBN: 978-3-8348-0287-3 Absatz [32.10.2]
- CARL F B ET AL: "KOLLISIONSSICHERE LOKOMOTIVEN - SPEZIFISCHE ANFORDERUNGEN UND DEREN PRAKTISCHE UMSETZUNG AM BEISPIEL DER LOKOMOTIVFAMILIE TRAXX ON BOMBARDIER TRANSPORTATION//CRASHWORTHYL LOCOMOTIVES - SPECIAL REQUIREMENTS AND THEIR PRACTICAL APPLICATION ON EXAMPLE OF TH", ZEVRAIL - GLASERS ANNALEN, GEORG SIEMENS VERLAG, BERLIN, DE, vol. 128, no. 9, 1 September 2004 (2004-09-01), pages 398-417, XP001200923, ISSN: 1618-8330

## Beschreibung

### Technisches Gebiet

Die Erfindung betrifft eine Vorrichtung und ein Verfahren zur Hinderniserkennung bei Schienenfahrzeugen, mit einer Kraftmesseinrichtung, um im Falle einer Kollision zwischen einem Kollisionsbalken des Schienenfahrzeugs und einer Masse eines Kollisionsobjektes ein Kollisionskraft-Messsignal zu erzeugen.

### Stand der Technik

Von einem auf der Trasse eines Schienenfahrzeugs liegenden Fremdkörper kann im Falle einer Kollision eine erhebliche Gefahr ausgehen. In der Schienenverkehrstechnik sind daher seit langem so genannte Schienenräumer bzw. Bahnräumer bekannt, mit denen ein Hindernis aus dem Fahrweg geräumt werden kann. Ein solcher Bahnräumer besteht meist aus einer Stahlkonstruktion, mit einem quer zur Fahrtrichtung liegenden Kollisionsbalken. Der Kollisionsbalken wird mittels einer Montagehalterung am Hauptrahmen des Schienenfahrzeugs oder am Drehgestellrahmen befestigt. Ein solcher Bahnräumer liegt gewöhnlich vor dem in Fahrtrichtung ersten Radsatz und in einem möglichst geringen Abstand von der Schienenoberkante.

Aus der EP 2 548 783 A2 ist beispielsweise eine Kollisionserfassung bei einem Fahrzeug offenbart, bei der eine Kollisionseinheit durch einen Scherstift in einer vorgegebenen Position gehalten wird. Erst bei Überschreiten einer vorgebbaren Intensität der Kollision kommt es zu bestimmten Reaktionen im Fahrzeug (beispielsweise eine Signalisierung an den Fahrzeugführer und/oder eine automatische Betätigung der Bremsen). Kleinere bzw. leichtere Hindernisse werden nicht erfasst.

Bekannte Systeme haben den Nachteil, dass eine zuverlässige Aussage über die Masse des Kollisionsobjektes nicht gemacht werden kann.

Ein weiterer Nachteil ist, dass mit zunehmender Fahrgeschwindigkeit auftretende Schwingungen zu einer unbeabsichtigten Auslösung eines Bremsvorgangs führen können. Heutzutage wird aber an Schienenfahrzeuge oftmals die Anforderung gestellt, dass eine Notbremsung zuverlässig immer dann eingeleitet werden soll, wenn die Masse des Hindernisses größer als ein bestimmter Grenzwert ist. Ein typischer Grenzwert ist beispielsweise ein auf dem Gleiskörper ruhender Fremdkörper mit einer Masse von größer als 5 kg. Ein kleineres Hindernis soll keinen Bremsvorgang auslösen, sondern ggf. eine entsprechende Meldung an den Fahrzeugführer übermitteln, aus der die Masse des Kollisionsobjektes ersichtlich ist.

Dokument US 2009/312949 A1 offenbart eine Vorrichtung zur Hinderniserkennung bei einem Fahrzeug, mit einer Kraftmesseinrichtung, um im Falle einer Kollision zwischen einem Kollisionsbalken des Fahrzeugs und einer Masse eines Kollisionsobjektes ein Kollisionskraft-Messsignal zu erzeugen, wobei
- das Kollisionskraft-Messsignal, wobei zur Kraftmessung ein Kraftverlauf über Biegung eines Balkens ermittelt ist, zusammen mit einem FahrzeugGeschwindigkeitssignal einer Auswerteeinrichtung zugeleitet ist
- die Auswerteeinrichtung dazu eingerichtet ist, das Kollisionskraft-Messsignal mittels eines Integrators zu integrieren und unter Verwendung des Fahrzeug-Geschwindigkeitssignals die Masse des Kollisionsobjektes zu ermitteln
- die Integration des Kollisionskraft-Messsignals eine zeitlich begrenzte Integration oder eine zeitlich unbegrenzte Integration ist
- eine Steuereinrichtung dazu eingerichtet ist, um zu entscheiden, ob die Masse als klein genug angesehen werden kann, oder einen vorgegebenen Schwellwert überschritten hat.

### Darstellung der Erfindung

Es ist eine Aufgabe der vorliegenden Erfindung ein Verfahren und eine Vorrichtung zur Hinderniserkennung bei Schienenfahrzeugen so anzugeben, dass auf möglichst einfache Weise eine zuverlässige Aussage über die Masse eines an einer Kollision beteiligten Hindernisses gemacht werden kann. Gelöst wird diese Aufgabe durch eine Vorrichtung gemäß den Merkmalen des Patentanspruchs 1 und bezüglich eines Verfahrens gemäß den Merkmalen des Patentanspruchs 5. In den jeweils abhängigen Ansprüchen sind vorteilhafte Ausgestaltungen der Erfindung definiert.

Die Erfindung geht von der Überlegung aus, dass die Masse eines Fremdkörpers bei einer Kollision vorteilhaft dadurch ermittelt werden kann, indem der bei einer Kollision zwischen einem Hindernis und einem Kollisionsbalken auftretende Kraftstoß ermittelt wird. Die hier zu Grunde liegende Methode basiert also auf dem Impulssatz. Demnach führt ein gegebener Kraftstoß mit einem beliebigen Kraft-Zeit-Verlauf, welcher auf eine freie Masse (Hindernis) ausgeübt wird, zu einer äquivalenten Impulszunahme dieser Masse. Wenn sich diese Masse, d.h. das Hindernis vor den Zusammenprall in Ruhe befindet, wird es mindestens auf Fahrgeschwindigkeit beschleunigt. Die Impulsänderung entspricht dem zeitlichen Integral des Kollisions-Kraftverlaufs, d.h. der Kraft-Zeit-Fläche. Ist diese Kraft-Zeit-Fläche als Kollisionssignal bekannt, so lässt sich die gesuchte Kollisions-Masse beispielsweise einfach dadurch ermitteln, indem der Wert der Kraft-Zeit-Fläche durch die Fahrgeschwindigkeit dividiert wird.

Durch die erfindungsgemäße Vorrichtung wird erreicht, dass die an der Kollision beteiligte Masse bordseitig quantitativ bestimmt werden kann. Seitens des Schienenfahrzeugs ist also im Falle einer Kollision bekannt, um welche Masse es sich dabei gehandelt hat. Dies hat den Vorteil, dass bestimmte Reaktionen in Abhängigkeit von der Schwere des Zusammenstoßes getroffen werden können. Handelt es sich beispielsweise um ein leichtgewichtiges Hindernis, das vom Bahnräumer einfach aus dem Weg geräumt werden kann, so kann eine Meldung an den Lokführer des Schienenfahrzeugs angebracht sein. Handelt es sich hingegen um einen schwereren Zusammenstoß, bei dem die am Zusammenstoß beteiligte Masse einen vorgegebenen Grenzwert überschreitet, beispielsweise um eine Masse, die größer als 5 kg ist, kann die Reaktion im Schienenfahrzeug die Einleitung eines Bremsvorgang sein, oder auch eine Notbremsung.

Da nicht der Momentanwert einer Kraft, sondern dessen Integral ausgewertet wird, erhöht sich die Robustheit des Systems. Von besonderem Vorteil ist dies insbesondere bei größeren Geschwindigkeiten. Bei höheren Fahrgeschwindigkeiten nehmen erfahrungsgemäß Drehgestell-Bewegungen in Fahrtrichtung zu. Es kann zu Schwingungen des Drehgestells kommen, wodurch bei bekannten Kollisionserfassungs-Vorrichtungen unerwünschte Fehlalarme bzw. unerwünschte Bremsvorgänge ausgelöst werden.

Ein weiterer Vorteil ist, dass bei der Realisierung der Erfindung nur ein vergleichsweise geringer technischer Aufwand erforderlich ist. Es kann weitgehend auf standardisierte elektronische Baukomponenten, beispielsweise auf digitale Prozessoren und digitale Filter und andere handelsübliche integrierte digitale Bausteine, wie elektronische Integratoren, zurückgegriffen werden. Die Kosten bei der Herstellung sind also vergleichsweise gering.

Es kann vorteilhaft sein, wenn die Integration eine zeitlich begrenzte Integration über die Zeit ist, dessen Integrationsdauer etwa der erwarteten Stoßdauer entspricht.

Hierbei kann es rechentechnisch von Vorteil sein, wenn der Integrator ein Block-Integrator mit konstanten oder nicht konstanten Koeffizienten ist. Dadurch wird bei der Signalverarbeitung eine Hochpasswirkung erzielt und gleichzeitig nur im betrachteten Zeitfenster, d.h. zwischen Anfang und Ende der Kollision, die Integration durchgeführt. Gleichanteile, wie beispielsweise Schnee der auf dem Gleiskörper liegt, wird dadurch nicht signaltechnisch ausgewertet.

Durch die Verwendung eines Blockintegrator mit nicht konstanten Koeffizienten (Implementierung als FIR-Filter), können die Randeffekte des Blockintegrators mit konstanten Koeffizienten verringert werden und zusätzlich noch eine Tiefpasswirkung eingebracht werden, wodurch dieser neben der Integrationswirkung auch als Dezimierungsfilter wirkt. Hierdurch kann Rechenleistung eingespart werden.

Alternativ zum Blockintegrator welcher als FIR-Filter realisiert werden kann, könnte auch eine rekursive Realisierung des unendlichen Integrators mittels eines IIR-Filters angewandt werden. Da der rekursive Integrator keine Hochpasswirkung aufweist werden die Gleichanteile mittels eines zusätzlichen Hochpass entfernt. Diese Realisierung ist vorteilhaft bei Prozessor-Systemen mit wenig Arbeitsspeicher, da im Gegensatz zum FIR-Filter keine Eingangsdaten zwischengespeichert werden müssen.

Um Höhenänderungen, verursacht durch das Einfedern der Primärfeder, zu verhindern, kann es vorteilhaft sein, wenn die Kraftmesseinrichtung im Kollisions-Kraftfluss zwischen Kollisionsbalken und einem Achslager des Schienenfahrzeugs angeordnet ist.

Hierzu alternativ ist aber auch eine vergleichsweise einfachere Konstruktion möglich, bei der die Einrichtung zur Kraftmessung zwischen Bahnräumer und Drehgestell-Rahmen direkt in den Kraftfluss eingebunden ist.

### Kurzbeschreibung der Zeichnungen

Zur weiteren Erläuterung der Erfindung wird im nachfolgenden Teil der Beschreibung auf Zeichnungen Bezug genommen, in denen weitere vorteilhafte Ausgestaltungen, Wirkungen und Varianten der Erfindung anhand nicht einschränkender Ausführungsbeispiele näher erläutert sind.

Es zeigen:
- Figur 1: eine schematische Darstellung eines Ausführungsbeispiels der Erfindung, welche in einem Blockdiagramm die Ermittlung der Masse eines Kollisions-Objektes veranschaulicht, wobei einer an Bord eines Schienenfahrzeugs befindlichen Signal- und Auswertevorrichtung ein Kollisionskraft-Signal und ein Geschwindigkeitssignal zugeführt ist;
- Figur 2: FIR-Filterkoeffizienten eines Block-Integrators in Abhängigkeit der Integrationszeit, welcher bevorzugt geeignet ist, in der Signal- und Auswertevorrichtung den Kraftstoß und in weiterer Folge die Masse des Kollisionsobjektes zu berechnen;
- Figur 3: ein Diagramm welches den geschwindigkeitsabhängigen Störabstand zeigt; Kurve 18 zeigt den berechneten Kraftstoß bei einer Kollision mit einem Objekt von 5kg in Abhängigkeit von der Geschwindigkeit, wobei die Reibung nicht berücksichtigt ist; Kurve 17 zeigt den während Normalbetrieb (einer Fahrt des Schienenfahrzeugs ohne Kollision) zu erwartende Kraftstoß, berechnet aus der Rahmenbeschleunigung und der Balkenmasse von 10kg, wobei die Werte der Rahmenbeschleunigung real gemessene Werte aus Betriebsmessungen sind;
- Figur 4: wie Figur 3, jedoch wird hier zum Kraftstoß aus der Kollision mit dem 5kg Objekt noch der Kraftstoß aus der Reibung dieses 5kg Objektes mit der Fahrbahn addiert, wodurch sich der Störabstand bei niedrigen Geschwindigkeiten erhöht;
- Figur 5: eine schematische Darstellung, welche die Montage der Kraftmesseinrichtung im Kraftfluss zwischen Bahnräumer und Achslager zeigt;
- Figur 6: eine schematische Darstellung, welche die Montage der Kraftmesseinrichtung im Kraftfluss zwischen Bahnräumer und Drehgestell-Rahmen zeigt.

### Ausführung der Erfindung

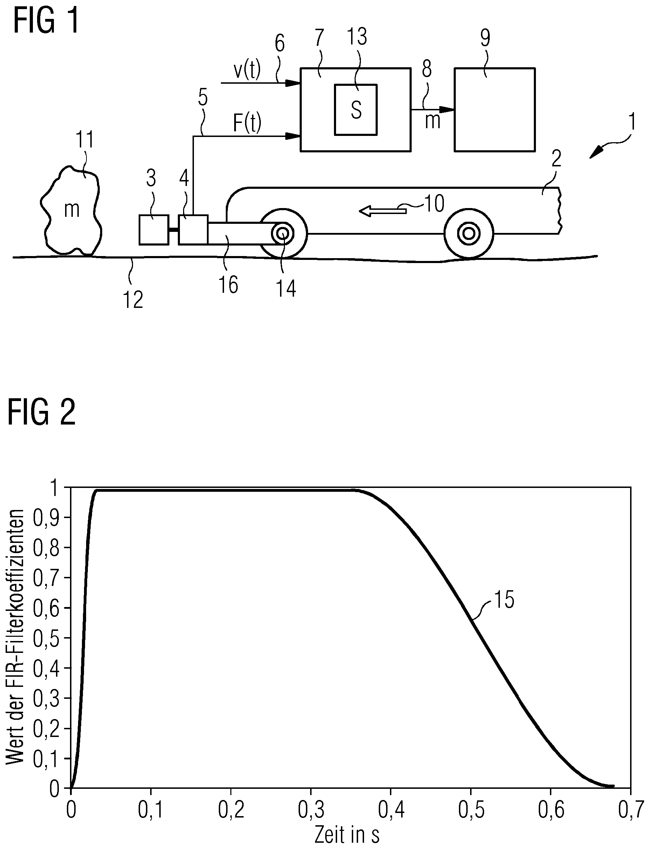

Figur 1 zeigt in einer schematischen Darstellung ein erstes Ausführungsbeispiel der Erfindung. In Figur 1 ist mit dem Bezugszeichen 1 ein nicht näher dargestelltes Schienenfahrzeug angedeutet, das sich in Richtung des Pfeils 10 auf dem Schienenstrang 12 bewegt. Das Schienenfahrzeug 1 bewegt sich auf ein auf dem Schienenstrang 12 liegendem Hindernis 11 zu. Dieses Hindernis 11 befinde sich in Ruhe, und habe die Masse m. Frontseitig am Schienenfahrzeug 1 befindet sich ein Kollisionsbalken 3, im Folgenden auch Bahnräumer bezeichnet. Kommt es zu einer Kollision zwischen dem Bahnräumer 3 des Schienenfahrzeugs 1 und dem Hindernis 11, so wird die Masse m mindestens auf Fahrzeuggeschwindigkeit, jedoch maximal auf doppelte Fahrzeuggeschwindigkeit, beschleunigt. Auf den Bahnräumer 3 wirkt eine Kollisionskraft F. Diese Kollisionskraft F wird mittels einer Kraftmesseinrichtung 4, die sich im Kraftfluss zwischen Bahnräumer 3 und einer am Achslager 14 montierten Montagehalterung 16 angeordnet ist, gemessen. Dieses zeitabhängige Kollisionskraft-Messsignal 5, im Folgenden auch kurz Kraftsignal F(t) bezeichnet, wird zusammen mit einem Geschwindigkeitssignal 6 einer an Bord befindlichen Signalverarbeitungs- und Auswerteeinrichtung 7, im Folgenden auch kurz Auswerteeinrichtung 7 bezeichnet, zugeführt. Die Auswerteeinrichtung 7 beinhaltet eine Integrationsvorrichtung 13. Diese Integrationsvorrichtung 13 führt eine zeitlich begrenzte Integration des Kraftsignals F(t) durch. Der Kraftstoß wird durch Integration des Kraftsignals F(t) in den Integrationsgrenzen ta und tb ermittelt. Die beiden Integrationsgrenzen ta bzw. tb bezeichnen dabei Anfang und Ende des Zusammenstoßes. Wie bereits gesagt, wird davon ausgegangen, dass das Hindernis 11 sich vor der dem Zusammenstoß in Ruhe befand und nach der Kollision sich mit Fahrzeuggeschwindigkeit bewegt.

Die Funktionalität der Integration kann elektronisch unterschiedlich realisiert sein, geeignet ist beispielsweise eine zeitlich begrenzte Integration mittels eines an sich bekannten Blockintegrators. Auch digitale Filter, wie beispielsweise an sich bekannte IIR- und/oder FIR-Filter können in der Auswerteeinrichtung hierfür eingesetzt werden.

Gemäß der Erfindung wird also als Kriterium zur Hinderniserkennung nicht eine Kraft oder ein Kraftverlauf, sondern das Integral der bei der Kollision auftretenden Kraft ausgewertet. Der durch die Kollision verursachte Kraftstoß hängt nur von der Objektmasse m und von der Änderung der Objekt-Geschwindigkeit ab. Der Erfindung liegt der Gedanke zu Grunde, dass ein gegebener Kraftstoß mit einem beliebigen Kraftverlauf welcher auf eine (freie) Masse ausgeübt wird, zu einer äquivalenten Impuls-Zunahme dieser Masse führt. Auf die hier vorliegende Anwendung als Hinderniserkennung wird dieser Zusammenhang so interpretiert, dass ein Objekt, welches von Ruhe auf Fahrzeuggeschwindigkeit beschleunigt wird, einen definierten Kraftstoß auf den Bahnräumer 3 ausübt. Die Größe dieses Kraftstosses entspricht der Objektmasse m multipliziert mit der Geschwindigkeitsänderung des Objektes.

Die zwischen der Zeitachse und dem augenblicklichen Verlauf des Kraftsignals F(t) liegende Fläche entspricht der Impulsänderung der anfänglich ruhenden Kollisionsmasse m. Die Kollisionsmasse m errechnet sich, indem das zeitliche Integral des Kraftverlaufs durch die Geschwindigkeit des Schienenfahrzeugs dividiert wird. Dabei ist es grundsätzlich so, dass die Massebestimmung unabhängig davon ist, innerhalb welcher Zeit der Stoß erfolgt.

Das Rechenergebnis ist im Blockdiagramm der Figur 1 durch das Kollisionsmasse-Signal 8 dargestellt. Das Signal 8 repräsentiert die Masse des Hindernisses und wird einer Steuereinrichtung 9 zugeführt, welche gegebenenfalls durch Vergleich mit einem vorgegebenen Masse-Schwellwert darüber entscheidet, wie der Zusammenstoß interpretiert werden soll, das heißt ob die Masse m beim Zusammenstoß als klein genug angesehen werden kann, um nur eine Meldung an den Lokführer auszugeben, oder den vorgegebenen Schwellwert überschritten hat, so dass ein Bremsvorgang bzw. eine Notbremsung des Schienenfahrzeugs eingeleitet werden muss.

Mit anderen Worten, gemäß dem Ansatz der Erfindung wird also als Kriterium einer Meldung bzw. Bremsung nicht der (Grenz-) Wert einer Kraft an sich, sondern das Integral einer Kraft ausgewertet. Dadurch ist eine quantitative Bestimmung der Kollisionsmasse möglich. Dies ermöglicht wiederum eine Differenzierung bei der Hinderniserkennung. Dadurch wird den heutzutage an Schienenfahrzeuge gestellten Anforderungen besser Rechnung getragen: Ein Zusammenstoß mit einem Hindernis soll auch quantitativ zu erfassen sein, so dass eine bessere Aussage über die Schadenswirkung gemacht werden kann.

Ein weiterer Vorteil ist die größere Robustheit der elektronischen Hinderniserkennung: Die Gefahr eines Fehlalarms, der beispielsweise durch eine in Fahrtrichtung liegende Bewegung bzw. Schwingung des Drehgestells hervorgerufen werden kann, ist dank der Auswertung des Kraft-Integrals geringer.

Die Figur 2 zeigt beispielhaft eine in der elektronischen Signalverarbeitung 7 verwendete Integrationsfunktion eines Integrators 13. Vorteilhaft ist der Einsatz eines zeitlich begrenzten Integrators, dessen Integrationsdauer etwa der erwarteten Stoßdauer entspricht. Der im dargestellten Beispiel verwendete Integrator ist ein so genannter Block-Integrator. Auf der Abszisse ist in Figur 2 die Integrationszeit in Sekunden s aufgetragen, auf der Ordinate der Wert der FIR-Filterkoeffizienten. Die Integrationsfunktion 15 ist nicht ein Rechteckfenster, sondern ein modifiziertes Rechteckfenster, welches am Anfang und am Ende mit jeweils einer Hanning-Funktion "abgerundet" ist. Die mittlere Integrationsdauer dieses modifizierten Blockintegrators wurde im dargestellten Beispiel mit 0.5 Sekunden gewählt, in der Annahme, dass die Kollision mit dem Objekt nach 0.5s abgeschlossen ist.

Um Einflüsse aus niederfrequenten Bewegungen zu reduzieren, wurde gemäß der Erfindung zudem ein Hochpass mit einer Grenzfrequenz von etwa 1 Hz vorgeschaltet.

Mit einem derartigen Hochpassfilter, ist es möglich, Störeinflüsse, verursacht durch Bewegungen in Fahrtrichtung (X-Richtung), zu verringern. Durch die Charakteristik des Hochpass wird sichergestellt, dass eine auf den Bahnräumer wirkende konstante Kraft, - wie beispielsweise auf der Schienentrasse liegender Schnee -, für die elektronische Hinderniserkennung nicht ausgewertet wird.

Im Folgenden wird anhand von Betriebsmessungen der Störabstand zwischen dem Nutzsignal, welches dem bei einer Kollision auftretenden Kraftstoß entspricht, und jenen Störgrößen, die infolge der bei Fahrt des Schienenfahrzeugs auftretenden Rahmenbewegung auftreten, dargestellt.

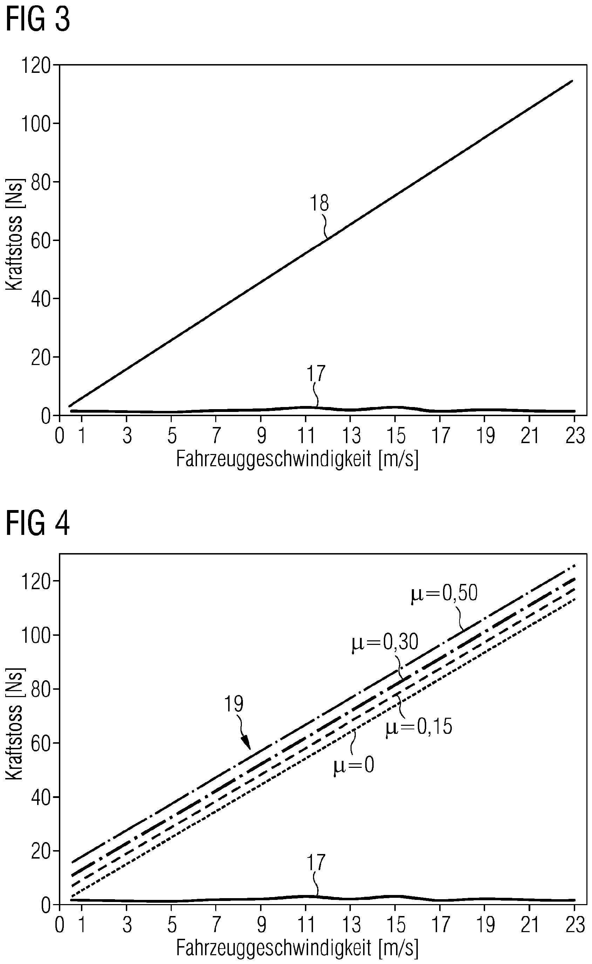

In den folgenden Diagrammen der Figur 3 und der Figur 4 ist jeweils auf der Abszisse die Geschwindigkeit in Meter pro Sekunde (m/s), und auf der Ordinate der Kraftstoß in Newton mal Sekunde (Ns) dargestellt. Bei beiden Diagrammen wird für den Bahnräumer eine Masse von 10 kg und für das Hindernis eine Masse von 5 kg angenommen.

Im ersten Diagramm (Figur 3) ist die Reibung nicht berücksichtigt. Die Kurve 17 zeigt den bei Normalbetrieb (kollisionsfreie Fahrt des Schienenfahrzeugs) auftretenden Störpegel (integrierte Beschleunigung mal Balkenmasse 10 kg), wobei die für die Berechnung des Störpegels notwendigen Beschleunigungswerte aus Betriebsmessungen stammen. Die Kurven 18 (Figur 3) bzw. 19 (Figur 4) zeigen den berechneten Wert des Kraftstoß (plastischer Stoß), gemessen in Ns, als Funktion der Fahrzeuggeschwindigkeit; die Kollisionsmasse beträgt 5 kg. Wie Kurve 18 (Figur 3) entnommen werden kann, nimmt der infolge einer Kollision entstehende Kraftstoß 18 linear mit der Geschwindigkeit zu. Bei einer Geschwindigkeit von unter 0,5 m/s ist eine Auswertung kaum möglich, da der Störabstand zu gering ist, d.h. der durch die RahmenBeschleunigung verursachte Störanteil ist im Vergleich zum Kollisions-Kraftstoß dann nicht mehr vernachlässigbar. Ab einer Geschwindigkeit von etwa 1 m/s nimmt aber der Abstand zu diesem Störpegel linear zu, so dass hier der Kraftstoß hinreichend weit vom Wert des Störpegels, von etwa 1 Ns, entfernt liegt. Damit ist, - lässt man den Reibungsanteil außer Acht -, ab einer Geschwindigkeit von etwa 1 m/s eine hinreichend genaue Schätzung der Masse m des Hindernisses 11 möglich.

Im zweiten Diagramm (Figur 4) ist die Reibung in Form von Gleitreibung für unterschiedliche Reibungskoeffizienten p berücksichtigt. Dabei wurden folgende Werte angenommen µ=0; µ=0,15; µ=0.3; µ=0,5. Wie dem Diagramm der Figur 4 entnommen werden kann, treten unterhalb von 3 m/s Reibungseffekte zunehmend in den Vordergrund. Ab einer Geschwindigkeit von etwa 3 m/s dominiert der Stoß-Anteil aus der Massenbeschleunigung, so dass ab dieser Geschwindigkeit bei einem Zusammenstoß zwischen dem Bahnräumer und einem ruhenden Hindernis die Reibung vernachlässigt werden kann und eine hinreichend genaue Aussage über die Masse des Kollisionsobjektes möglich ist. Bei niedrigen Geschwindigkeiten sollte jedoch diese Reibung mit einem gewählten "mittleren" Reibungskoeffizienten berücksichtigt werden.

Vergleicht man die beiden Diagramme (Figur 3 und Figur 4) so kann gesagt werden, dass mittels der erfindungsgemäßen elektronischen Hinderniserkennung ab einer Geschwindigkeit von etwa 2 m/s eine hinreichend genaue Aussage über die Masse m eines Kollisionsobjektes 11 gemacht werden kann. Bei höheren Geschwindigkeiten kann der Einfluss der Reibung praktisch vernachlässigt werden.

Bei Geschwindigkeiten unter etwa 1 m/s ist eine Massenschätzung des Kollisionsobjektes über den Impulssatz schwer möglich, doch kann hier über die geschwindigkeitsunabhängige Reibung, welche ebenfalls einen Kraftstoß verursacht, auch bei sehr niedrigen Fahrgeschwindigkeiten eine Schätzung der Kollisionsmasse gemacht werden. Da die Reibungskraft direkt von dem Reibungskoeffizient abhängt, ist hier allerdings mit einem größeren Schätzfehler zu rechnen.

Es versteht sich, dass als Sensoren 20 zur Kraftmessung nicht zwingend Kraftsensoren eingesetzt werden müssen. Es ist auch möglich den Kraftverlauf bei der Kollision indirekt über die Biegung eines Balkens oder einer Feder zu ermitteln. In diesem Fall wird eben eine zur Kraft proportionale Wegänderung gemessen. Zur Wegmessung geeignete Sensoren können beispielsweise herkömmliche Dehnungs-Mess-Streifen auf einem Biegebalken sein, oder induktive oder optische Abstandssensoren, oder ein Seil-Potenziometer oder auch Geschwindigkeit-/Beschleunigungssensoren in Verbindung mit einer einfachen bzw. zweifachen Integration. Diese Sensoren können auf einem Federelement, zum Beispiel einer Blattfeder, die beim Stoß gebogen wird, platziert sein.

Der Kollisionsbalken 3 kann am Schienenfahrzeug 1 in unterschiedlicher Art und Weise befestigt sein: der Bahnräumer 3 kann am Rahmen des Drehgestells 2 und/oder am Achslager-Gehäuse 14 montiert sein.

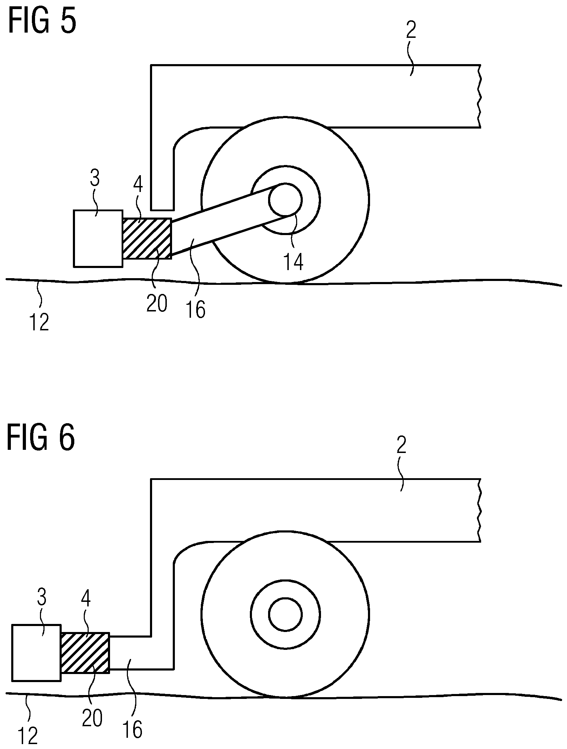

Figur 5 zeigt eine Anordnung, bei der Sensoren 20 der Kraft-Messvorrichtung 4 im Kraftfluss zwischen Bahnräumer 3 und einer Montagehalterung 16, die am Achslager 14 befestigt ist, angeordnet ist. Diese Anordnung hat den Vorteil, dass Höhenänderungen des Drehgestellrahmens 2 ohne Einfluss sind.

Figur 6 zeigt alternativ hierzu eine Anordnung bei der Sensoren 20 der Kraft-Messvorrichtung 4 im Kraftfluss zwischen Bahnräumer 3 und einer am Drehgestellrahmen 2 befestigten Montagehalterung 16 angeordnet ist.

Als Sensoren 20 bzw. Kraft-Messumformer kommen verschiedene Einrichtungen infrage, beispielsweise eine Kraftmessdose, oder eine indirekte Messmethode, bei der ein Wegsignal einer Feder angewendet wird jetzt behandeln die, in ein Kraftsignal umgewandelt wird.

Obwohl die Erfindung in Detail durch die oben als bevorzugt dargestellten Ausführungsbeispiele näher illustriert und beschrieben wurde, so ist die Erfindung nicht durch die offenbarten Beispiele eingeschränkt.

Zusammenstellung der verwendeten Bezugzeichen
- 1: Schienenfahrzeug
- 2: Drehgestell
- 3: Kollisionsbalken, Bahnräumer
- 4: Kraftmesseinrichtung
- 5: Kollisionskraft-Messsignal
- 6: Geschwindigkeitssignal
- 7: Auswerteeinrichtung
- 8: Kollisionsmasse-Signal
- 9: Steuereinrichtung
- 10: Fahrtrichtung
- 11: Hindernis, Kollisionsobjekt
- 12: Schienenstrang
- 13: Integrator
- 14: Achslager
- 15: Integrationsfunktion
- 16: Montagehalterung
- 17: Störpegel
- 18: Kraftstoß als Funktion von 6, ohne Reibung
- 19: Kraftstoß als Funktion von 6, mit Reibung
- 20: Sensor

- m: Masse von 11

## Patentansprüche

1. Vorrichtung zur Hinderniserkennung bei einem Schienenfahrzeug (1), mit einer Kraftmesseinrichtung (4), um im Falle einer Kollision zwischen einem Kollisionsbalken (3) des Schienenfahrzeugs (1) und einer Masse (m) eines Kollisionsobjektes (11) ein Kollisionskraft-Messsignal (5) zu erzeugen, wobei
- das Kollisionskraft-Messsignal (5), wobei zur Kraftmessung als Kraftmessdosen ausgebildete Sensoren (20) eingesetzt sind oder ein Kraftverlauf über Biegung eines Balkens oder einer Feder ermittelt ist, zusammen mit einem Schienenfahrzeug-Geschwindigkeitssignal (6) einer Auswerteeinrichtung (7) zugeleitet ist, wobei in der Auswerteeinrichtung (7) ein Hochpassfilter vorgesehen ist, der zum Entfernen von Gleichanteilen und niederfrequenten Signalanteilen in einer Weise verwendet ist, dass eine auf den Kollisionsbalken (3) wirkende konstante Kraft für die elektronische Hinderniserkennung unausgewertet bleibt,
- die Auswerteeinrichtung (7) dazu eingerichtet ist, das Kollisionskraft-Messsignal (5) mittels eines Integrators (13) zu integrieren und unter Verwendung des Schienenfahrzeug-Geschwindigkeitssignals (6) die Masse (m) des Kollisionsobjektes (11) zu ermitteln,
- die Integration des Kollisionskraft-Messsignals (5) eine zeitlich begrenzte Integration oder eine zeitlich unbegrenzte Integration ist, und
- eine Steuereinrichtung (9) dazu eingerichtet ist, durch Vergleich mit einem vorgegebenen Masse-Schwellwert, um zu entscheiden, ob die Masse (m) als klein genug angesehen werden kann, um nur eine Meldung an einen Lokführer auszugeben, oder den vorgegebenen Schwellwert überschritten hat, so dass ein Bremsvorgang des Schienenfahrzeugs (1) eingeleitet werden muss.

2. Vorrichtung nach Anspruch 1, wobei der die Integration ausführende Integrator (13) ein Block-Integrator, ausgeführt als FIR-Filter, oder ein IIR-Filter ist.

3. Vorrichtung nach Anspruch 1 oder 2, wobei die Kraftmesseinrichtung (4) zumindest einen Sensor (20) aufweist, der im Kollisions-Kraftfluss zwischen Kollisionsbalken (3) und einem Achslager (14) des Schienenfahrzeugs (1) angeordnet ist.

4. Vorrichtung nach Anspruch 1 oder 2, wobei die Kraftmesseinrichtung (4) zumindest einen Sensor (20) aufweist, der im Kollisions-Kraftfluss zwischen Kollisionsbalken (3) und Rahmen (16) des Drehgestells (2) oder Rahmen des Fahrgestells des Schienenfahrzeugs (1) angeordnet ist.

5. Verfahren zur Hinderniserkennung bei einem Schienenfahrzeug (1), wobei mittels einer Kraftmesseinrichtung (4) im Falle einer Kollision zwischen einem Kollisionsbalken (3) des Schienenfahrzeugs (1) und einer Masse (m) eines Kollisionsobjektes (11) ein Kollisionskraft-Messsignal (5) gemessen wird, wobei
- das Kollisionskraft-Messsignal (5), wobei zur Kraftmessung als Kraftmessdosen ausgebildete Sensoren (20) eingesetzt werden oder ein Kraftverlauf über Biegung eines Balkens oder einer Feder ermittelt wird, zusammen mit einem Schienenfahrzeug-Geschwindigkeitssignal (6) einer Auswerteeinrichtung (7) zugeleitet wird, wobei in der Auswerteeinrichtung (7) ein Hochpassfilter vorgesehen ist, der zum Entfernen von Gleichanteilen und niederfrequenten Signalanteilen in einer Weise verwendet wird, dass eine auf den Kollisionsbalken (3) wirkende konstante Kraft für die elektronische Hinderniserkennung unausgewertet bleibt,
- die Auswerteeinrichtung (7) das Kollisionskraft-Messsignal (5) mittels eines Integrators (13) integriert und unter Verwendung des Schienenfahrzeug-Geschwindigkeitssignals (6) die Masse (m) des Kollisionsobjektes (11) ermittelt,
- das Kollisionskraft-Messsignal (5) zeitlich begrenzt oder zeitlich unbegrenzt integriert wird, und
- eine Steuereinrichtung (9) entscheidet, durch Vergleich mit einem vorgegebenen Masse-Schwellwert, ob die Masse (m) als klein genug angesehen werden kann, um nur eine Meldung an einen Lokführer auszugeben, oder den vorgegebenen Schwellwert überschritten hat, so dass ein Bremsvorgang des Schienenfahrzeugs (1) eingeleitet werden muss.

6. Verfahren nach Anspruch 5, wobei als Integrator (13) ein Block-Integrator, ausgeführt als FIR-Filter, oder ein IIR-Filter verwendet wird.

7. Verfahren nach Anspruch 5, wobei die Kraftmesseinrichtung (4) zumindest einen Sensor (20) umfasst, welcher im Kollisions-Kraftfluss zwischen Kollisionsbalken (3) und Achslager (14) eines Drehgestells (2) des Schienenfahrzeugs (1) angeordnet ist.

8. Verfahren nach Anspruch 5, wobei die Kraftmesseinrichtung (4) zumindest einen Sensor (20) umfasst, welcher im Kollisions-Kraftfluss zwischen Kollisionsbalken (3) und Rahmen (16) des Drehgestells (2) des Schienenfahrzeugs (1) angeordnet ist.

9. Verfahren nach Anspruch 5, wobei die Ermittlung der Masse (m) über den Impulssatz für ein Schienenfahrzeug-Geschwindigkeitssignal (6) durchgeführt wird, dessen Signalwert größer als ein vorgebbarer Geschwindigkeits-Schwellwert ist.

10. Verfahren nach Anspruch 5, wobei unterhalb eines vorgebbarer Geschwindigkeits-Schwellwertes die Ermittlung der Masse über die Gleitreibung erfolgt.

11. Computer-Programm-Produkt enthaltend eine Befehlssequenz, die bewirkt, dass die Vorrichtung des Anspruchs 1 die Verfahrensschritte gemäß einem der Ansprüche 5-10 ausführt.

## Claims

1. Device for detecting obstacles for a rail vehicle (1), comprising a force measuring device (4) for producing a collision force measurement signal (5) in the event of a collision between a collision beam (3) of the rail vehicle (1) and a mass (m) of a collision object (11),
wherein
- the collision force measurement signal (5), wherein sensors (20) embodied as load cells are used for force measurement or a force characteristic is determined via the bending of a beam or spring, is fed together with a rail vehicle speed signal (6) to an evaluation device (7), wherein a high-pass filter is provided in the evaluation device (7), which is used to remove constant components and low-frequency signal components in such a manner that a constant force acting on the collision beam (3) remains unevaluated for the electronic obstacle detection,
- the evaluation device (7) is designed to integrate the collision force measurement signal (5) by means of an integrator (13) and to determine the mass (m) of the collision object (11) using the rail vehicle speed signal (6),
- the integration of the collision force measurement signal (5) is a time-limited integration or a time-unlimited integration, and
- a control device (9) is designed to decide, by comparison with a predefined mass threshold value, whether the mass (m) may be deemed small enough merely to generate an indication for a driver, or whether it has exceeded the predefined threshold value so that a brake application of the rail vehicle (1) must be initiated.

2. Device according to claim 1, wherein the integrator (13) performing the integration is a block integrator, implemented as a FIR filter, or an IIR filter.

3. Device according to claim 1 or 2, wherein the force measuring device (4) has at least one sensor (20) which is disposed in the collision force flow between the collision beam (3) and an axle box (14) of the rail vehicle (1).

4. Device according to claim 1 or 2, wherein the force measuring device (4) has at least one sensor (20) which is disposed in the collision force flow between the collision beam (3) and frame (16) of the bogie (2) or frame of the chassis of the rail vehicle (1).

5. Method for detecting obstacles for a rail vehicle (1), wherein a collision force measurement signal (5) is measured by means of a force measuring device (4) in the event of a collision between a collision beam (3) of the rail vehicle (1) and a mass (m) of a collision object (11), wherein
- the collision force measurement signal (5), wherein sensors (20) embodied as load cells are used for force measurement or a force characteristic is determined via the bending of a beam or spring, is fed together with a rail vehicle speed signal (6) to an evaluation device (7), wherein a high-pass filter is provided in the evaluation device (7), which is used to remove constant components and low-frequency signal components in such a manner that a constant force acting on the collision beam (3) remains unevaluated for the electronic obstacle detection,
- the evaluation device (7) integrates the collision force measurement signal (5) by means of an integrator (13) and determines the mass (m) of the collision object (11) using the rail vehicle speed signal (6),
- the collision force measurement signal (5) is integrated in a time-limited or a time-unlimited manner, and
- a control device (9) decides, by comparison with a predefined mass threshold value, whether the mass (m) may be deemed small enough merely to generate an indication for a driver, or whether it has exceeded the predefined threshold value so that a brake application of the rail vehicle (1) must be initiated.

6. Method according to claim 5, wherein a block integrator, implemented as a FIR filter, or an IIR filter is used as an integrator (13).

7. Method according to claim 5, wherein the force measuring device (4) comprises at least one sensor (20) which is disposed in the collision force flow between the collision beam (3) and axle box (14) of a bogie (2) of the rail vehicle (1).

8. Method according to claim 5, wherein the force measuring device (4) comprises at least one sensor (20) which is disposed in the collision force flow between the collision beam (3) and frame (16) of the bogie (2) of the rail vehicle (1).

9. Method according to claim 5, wherein the determination of the mass (m) is carried out via the conservation of linear momentum for a rail vehicle speed signal (6), the signal value of which is greater than a predefinable speed threshold value.

10. Method according to claim 5, wherein, below a predefinable speed threshold value, the mass is determined via the sliding friction.

11. Computer program product containing a command sequence, which causes the apparatus of claim 1 to carry out the method steps according to one of claims 5-10.

## Revendications

1. Dispositif pour identifier des obstacles dans un véhicule ferroviaire (1), comprenant un dispositif de mesure de force (4) afin de produire, dans le cas d'une collision entre une poutre de collision (3) du véhicule ferroviaire (1) et une masse (m) d'un objet de collision (11), un signal de mesure de force de collision (5), dans lequel
- le signal de mesure de force de collision (5), dans lequel des capteurs (20) conçus sous la forme de capteurs de force sont utilisés pour une mesure de force ou une courbe de force est déterminée par flexion d'une poutre ou d'un ressort, est adressé avec un signal de vitesse de véhicule ferroviaire (6) à un dispositif d'évaluation (7), dans lequel un filtre passe-haut est prévu dans le dispositif d'évaluation (7), qui est utilisé pour éliminer des composantes uniformes et des composantes de signal à basse fréquence de telle sorte qu'une force constante agissant sur la poutre de collision (3) reste non évaluée pour l'identification électronique d'obstacles,
- le dispositif d'évaluation (7) est conçu pour intégrer le signal de mesure de force de collision (5) au moyen d'un intégrateur (13) et pour déterminer, en utilisant le signal de vitesse de véhicule ferroviaire (6), la masse (m) de l'objet de collision (11),
- l'intégration du signal de mesure de force de collision (5) est une intégration limitée dans le temps ou une intégration illimitée dans le temps, et
- un dispositif de commande (9) est conçu, par comparaison avec un seuil de masse prédéfini, pour décider si la masse (m) peut être considérée comme suffisamment faible pour ne délivrer qu'un message à un conducteur de train ou a dépassé le seuil prédéfini, de sorte qu'un processus de freinage du véhicule ferroviaire (1) doit être initié.

2. Dispositif selon la revendication 1, dans lequel l'intégrateur réalisant l'intégration (13) est un bloc intégrateur réalisé sous forme de filtre FIR ou un filtre IIR.

3. Dispositif selon la revendication 1 ou 2, dans lequel le dispositif de mesure de force (4) présente au moins un capteur (20) qui est agencé dans le flux de force de collision entre la poutre de collision (3) et un palier d'essieu (14) du véhicule ferroviaire (1).

4. Dispositif selon la revendication 1 ou 2, dans lequel le dispositif de mesure de force (4) présente au moins un capteur (20) qui est agencé dans le flux de force de collision entre la poutre de collision (3) et le cadre (16) du bogie (2) ou le cadre du châssis du véhicule ferroviaire (1).

5. Procédé pour identifier des obstacles dans un véhicule ferroviaire (1), dans lequel un signal de mesure de force de collision (5) est mesuré au moyen d'un dispositif de mesure de force (4) en cas de collision entre une poutre de collision (3) du véhicule ferroviaire (1) et une masse (m) d'un objet de collision (11), dans lequel
- le signal de mesure de force de collision (5), dans lequel des capteurs (20) conçus sous la forme de capteurs de force sont utilisés pour une mesure de force ou une courbe de force est déterminée par flexion d'une poutre ou d'un ressort, est adressé avec un signal de vitesse de véhicule ferroviaire (6) à un dispositif d'évaluation (7), dans lequel un filtre passe-haut est prévu dans le dispositif d'évaluation (7), qui est utilisé pour éliminer des composantes uniformes et des composantes de signal à basse fréquence de telle sorte qu'une force constante agissant sur la poutre de collision (3) reste non évaluée pour l'identification électronique d'obstacles,
- le dispositif d'évaluation (7) intègre le signal de mesure de force de collision (5) au moyen d'un intégrateur (13) et détermine, en utilisant le signal de vitesse de véhicule ferroviaire (6), la masse (m) de l'objet de collision (11),
- le signal de mesure de force de collision (5) est intégré de manière limitée ou illimitée dans le temps, et
- un dispositif de commande (9) décide, par comparaison avec une valeur de seuil de masse prédéterminée, si la masse (m) peut être considérée comme suffisamment faible pour ne délivrer qu'un message à un conducteur de train ou si la valeur de seuil prédéterminée a été dépassée, de sorte qu'un processus de freinage du véhicule ferroviaire (1) doit être initié.

6. Procédé selon la revendication 5, dans lequel un bloc intégrateur, réalisé sous forme de filtre FIR, ou un filtre IIR est utilisé en tant qu'intégrateur (13).

7. Procédé selon la revendication 5, dans lequel le dispositif de mesure de force (4) comprend au moins un capteur (20) qui est agencé dans le flux de force de collision entre la poutre de collision (3) et le palier d'essieu (14) d'un bogie (2) du véhicule ferroviaire (1).

8. Procédé selon la revendication 5, dans lequel le dispositif de mesure de force (4) comprend au moins un capteur (20) qui est agencé dans le flux de force de collision entre la poutre de collision (3) et le cadre (16) du bogie (2) du véhicule ferroviaire (1).

9. Procédé selon la revendication 5, dans lequel la détermination de la masse (m) est effectuée par l'intermédiaire de l'ensemble d'impulsions pour un signal de vitesse de véhicule ferroviaire (6) dont la valeur de signal est supérieure à un seuil de vitesse pouvant être prédéfini.

10. Procédé selon la revendication 5, dans lequel en dessous d'un seuil de vitesse pouvant être prédéfini, la détermination de la masse survient par frottement de glissement.

11. Produit de programme d'ordinateur comprenant une séquence d'instructions qui amène le dispositif selon la revendication 1 à exécuter les étapes du procédé selon l'une quelconque des revendications 5 à 10.
